# EUROPEAN PATENT APPLICATION

(11) **EP 2 634 156 A1**
(43) Date of publication of application: **04.09.2013**
(21) Application number: 11836348.0
(22) Date of filing: 26.10.2011
(51) Int. Cl.: C04B 35/195, H01L 21/683

(54) **CORDIERITE CERAMIC, AND MEMBER FOR SEMICONDUCTOR MANUFACTURE DEVICES WHICH COMPRISES SAME**

(30) Priority: 26.10.2010 JP 2010239798
(71) Applicant: Kyocera Corporation, Kyoto-shi Kyoto 612-8501 (JP)
(72) Inventor: IIDA, Shuichi, Kirishima-shi Kagoshima 899-4396 (JP); FUKUI, Akeo, Higashiomi-shi Shiga 527-8555 (JP); SUE, Toshiyuki, Kirishima-shi Kagoshima 899-4396 (JP)
(74) Representative: HOFFMANN EITLE
(86) International application number: PCT/JP2011/074691
(87) International publication number: WO 2012/057215

(57) **Abstract**

The present invention provides a cordierite ceramic having a small coefficient of thermal expansion and an excellent mechanical strength, and a member for semiconductor manufacture devices, which uses the cordierite ceramic. The cordierite ceramic contains a main component having a composition including Mg in an amount of 12.6% by mass or more and 14.0% by mass or less in terms of an oxide, Al in an amount of 33.4% by mass or more and 34.4% by mass or less in terms of an oxide and Si in an amount of 52.0% by mass or more and 53.6% by mass or less in terms of an oxide, and an accessory component, wherein the accessory component contains any one of Y, Yb, Er, and Ce in an amount of 4.5% by mass or more and 15.0% by mass or less in terms of an oxide based on 100% by mass of the main component, wherein cordierite, disilicate and spinel are present as crystal phases. The cordierite ceramic has a coefficient of thermal expansion ranging from -120 ppb/°C to +120 ppb/°C, a four-point bending strength of 170 MPa or more, a low thermal expansion performance and an excellent mechanical strength.

## Description

### TECHNICAL FIELD

The present invention relates to a cordierite ceramic, and a member for semiconductor manufacturing devices which comprises the cordierite ceramic.

### BACKGROUND ART

Cordierite ceramics are used for filters, honeycombs, refractories and the like because they have a small coefficient of thermal expansion. In recent years, it has been proposed that a cordierite ceramic is used for members for semiconductor manufacturing devices such as vacuum device structures, susceptors, stages, or jigs in semiconductor manufacturing processes. As such a cordierite ceramic, a cordierite ceramic has been proposed wherein the cordierite ceramic contains cordierite at a ratio of 80 to 92% by weight and an oxide of a rare earth element (RE) at a ratio of 2 to 20% by weight, a crystal grain of the cordierite includes a mixed structure of high-temperature type cordierite and low-temperature type cordierite, the area ratio of the low-temperature type cordierite in the cordierite crystal grain is 5% or more, and the Young's modulus is 120 GPa or more (see Patent Document 1).

### PRIOR ART DOCUMENT

### PATENT DOCUMENT

Patent Document 1: Patent Document 1: Japanese Unexamined
Patent Publication No. 2001-39764

### SUMMARY OF THE INVENTION

### PROBLEMS TO BE SOLVED BY THE INVENTION

In manufacturing processes of semiconductors such as LSIs, rapid miniaturization of circuits makes the circuits precise to the extent that the line width thereof is reduced to a level of submicron order. For example, in a stage used in an exposure device for forming a high-precision circuit on a Si wafer, a positioning accuracy of 100 nm (0.1 µm) or less is required, and a positioning error ascribable to the coefficient of thermal expansion of a member has significant influences on the quality and yield of a product.

Thus, for improving the quality and yield by improving the positioning accuracy of the stage used in the exposure device, a ceramic exhibiting a coefficient of thermal expansion from the ppm order to the ppb order is desired as the ceramic that forms the above-mentioned stage.

Moreover, members for semiconductor manufacturing devices, such as vacuum device structures, susceptors, stages or jigs in semiconductor manufacturing processes are increasingly upsized with upsizing of semiconductor wafers, and required to accommodate self-weight and a cantilever support structure, and therefore desired to have a decreased coefficient of thermal expansion and an increased mechanical strength (four-point bending strength).

The present invention has been devised for satisfying the above-described requirements, and an object thereof is to provide a cordierite ceramic having a small coefficient of thermal expansion and an excellent mechanical strength, and a member for semiconductor manufacturing devices which comprises the cordierite ceramic.

### MEANS FOR SOLVING THE PROBLEMS

A cordierite ceramic of the present invention contains a main component having a composition including Mg in an amount of 12.6% by mass or more and 14.0% by mass or less in terms of an oxide, Al in an amount of 33.4% by mass or more and 34.4% by mass or less in terms of an oxide and Si in an amount of 52.0% by mass or more and 53. 6% by mass or less in terms of an oxide, and also contains as an accessory component any one of Y, Yb, Er and Ce in an amount of 4.5% by mass or more and 15.0% by mass or less in terms of an oxide based on 100% by mass of the main component, wherein cordierite, disilicate and spinel are present as crystal phases.

A member for semiconductor manufacturing devices according to the present invention comprises the cordierite ceramic of the present invention having the constitution described above.

### EFFECTS OF THE INVENTION

A cordierite ceramic of the present invention contains a main component having a composition including Mg in an amount of 12.6% by mass or more and 14.0% by mass or less in terms of an oxide, Al in an amount of 33.4% by mass or more and 34.4% by mass or less in terms of an oxide and Si in an amount of 52.0% by mass or more and 53.6% by mass or less in terms of an oxide, and also contains as an accessory component any one of Y, Yb, Er and Ce in an amount of 4.5% by mass or more and 15.0% or less in terms of an oxide based on 100% by mass of the main component, wherein cordierite, disilicate and spinel are present as crystal phases. Therefore, the presence ratio of crystal phases of cordierite exhibiting a coefficient of thermal expansion on the negative side, and disilicate and spinel each exhibiting a coefficient of thermal expansion on the positive side can be optimized, and the coefficient of thermal expansion of the resulting cordierite ceramic can be made to the range of -120 ppb/°C to +120 ppb/°C. Further, spinel is present as a crystal phase, so that grain growth in crystal phases of cordierite can be suppressed to form the cordierite ceramic into a dense body composed of fine crystals, and therefore mechanical properties can be improved.

Further, according to a member for semiconductor manufacturing devices according to the present invention, by using the cordierite ceramic of the present invention, a positioning accuracy of 100 nm (0.1 µm) or less can be achieved, so that the quality and yield can be improved in formation of a high-precision circuit on a Si wafer.

### EMBODIMENTS OF THE INVENTION

One example of a cordierite ceramic of this embodiment will be described below.

The cordierite ceramic of this embodiment contains a main component having a composition including Mg in an amount of 12.6% by mass or more and 14.0% by mass or less in terms of an oxide, Al in an amount of 33.4% by mass or more and o 34.4% by mass or less in terms of an oxide and Si in an amount of 52.0% by mass or more and 53.6% by mass or less in terms of an oxide, and also contains as an accessory component any one of Y, Yb, Er and Ce in an amount of 4.5% by mass or more and 15.0% by mass or less in terms of an oxide based on 100% by mass of the main component.

The cordierite ceramic of this embodiment has cordierite (Mg₂Al₄Si₅O₁₈) composed of three components: MgO, Al₂O₃ and SiO₂, disilicate (e.g., Yb₂Si₂O₇) composed of an oxide of any one of Y, Yb, Er and Ce, and SiO₂, and spinel (MgAl₂O₄) composed of MgO and Al₂O₃ as crystal phases.

Here, the cordierite ceramic of this embodiment satisfies the above-described composition, and has cordierite, disilicate and spinel as crystal phases, so that the presence ratio of crystal phases of cordierite exhibiting a coefficient of thermal expansion on the negative side, and disilicate and spinel each exhibiting a coefficient of thermal expansion on the positive side can be optimized. Therefore, the coefficient of thermal expansion of the resulting cordierite ceramic can be made close to 0 (zero). Specifically, the above-described composition is satisfied, and cordierite, disilicate and spinel are present as crystal phases, so that the coefficient of thermal expansion of the cordierite ceramic at room temperature (20 to 25°C) can be made to the range of -120 ppb/°C to +120 ppb/°C. It is to be noted that in disilicate and spinel each exhibiting a coefficient of thermal expansion on the positive side, disilicate exhibits a value of the coefficient of thermal expansion greater than that exhibited by spinel on the positive side.

The reason why the content of any one of Y, Yb, Er and Ce as an accessory component based on 100% by mass of the main component is 4.5% by mass or more and 15.0% by mass or less in terms of an oxide is that if the content of the accessory component is less than 4.5% by mass, the presence ratio of disilicate decreases, so that the coefficient of thermal expansion of the cordierite ceramic at room temperature (20 to 25°C) is less than -120 ppb/°C. On the other hand, if the content of the accessory component is more than 15.0% by mass, the presence ratio of disilicate increases, so that the coefficient of thermal expansion of the cordierite ceramic at room temperature (20 to 25°C) is more than +120 ppb/°C.

Further, spinel is present as a crystal phase, so that grain growth in crystal phases of cordierite can be suppressed to form the cordierite ceramic into a dense body composed of fine crystals, and therefore mechanical properties can be improved. Specifically, a four-point bending strength of 170 MPa or more can be achieved. When the cordierite ceramic has a strength of 170 MPa or more, the possibility of damage under self-weight, damage under a load applied with a cantilever support structure, or the like, which has been a problem in upsizing a member in association with upsizing a semiconductor wafer, is low. Therefore, the cordierite ceramic can be preferably used for members for semiconductor manufacturing devices, such as vacuum device structures, susceptors, stages, and jigs in semiconductor manufacturing processes. The four-point bending strength may be measured in accordance with JIS R 1601-2008. It is needless to say that spinel is preferably present between crystal phases of cordierite in a dispersed manner.

The content, in terms of an oxide, of each component forming the cordierite ceramic of this embodiment can be determined by pulverizing a part of the cordierite ceramic, and dissolving the resulting powder in a solution of hydrochloric acid or the like, then measuring the resulting solution with an ICP (inductively coupled plasma) emission spectrophotometer (ICPS-8100 manufactured by Shimadzu Corporation), and using the obtained value of the content of each metal element to calculate an oxide equivalent content of each element. Identification of the crystal phase of each of cordierite, disilicate and spinel can be performed by, for example, measuring the surface of the cordierite ceramic under conditions of 2θ = 8° to 80° and CuKα₁ measurement using an X-ray diffractometer (X' PertPRO manufactured by PANalytical, Inc.), and checking the obtained X-ray diffraction chart with a JCPDS card to identify the crystal phases.

For measurement of the coefficient of thermal expansion, a coefficient of thermal expansion in a desired temperature range can be measured by providing a prismatic or cylindrical sample having a length of 10 to 20 mm and a side length or diameter of about 5 mm, and making a measurement at a temperature elevation rate of 1°C/min in a constant temperature elevation measurement mode in accordance with JIS R 1618-2002 using, for example, Laser Thermal Expansion Meter LIX-1 (Shinku Riko, Inc.) as a measurement apparatus.

In the cordierite ceramic of this embodiment, where the content of disilicate is A and the content of spinel is B, the ratio of A to B (A/B) is preferably 0.5 or more and 24.0 or less.

When the ratio (A/B) of the content of disilicate to the content of spinel is 0.5 or more and 24.0 or less as described above, the presence ratio of crystal phases of cordierite exhibiting a coefficient of thermal expansion on the negative side, and disilicate and spinel each exhibiting a coefficient of thermal expansion on the positive side can be further optimized. Therefore, the coefficient of thermal expansion of the cordierite ceramic at room temperature (20 to 25°C) can be made to the range of -100 ppb/°C to +100 ppb/°C.

The contents of disilicate and spinel may be calculated from the ratio of the crystal phase of each of cordierite, disilicate and spinel by, for example, making an X-ray diffraction measurement under conditions of 2θ = 8° to 80° and CuKα₁ measurement using an X-ray diffractometer (X'PertPRO manufactured by PANalytical, Inc.), and analyzing the result of the X-ray diffraction measurement using Rietveld Analysis Program RIETAN. The ratio (A/B) of the content of disilicate to the content of spinel may be calculated from the calculated respective contents.

As specific contents of crystal phases forming a cordierite ceramic in which the ratio of A to B (A/B) is 0.5 or more and 24.0 or less, where the content of disilicate is A and the content of spinel is B, disilicate constitutes about 2.6 to 12.7% by mass, spinel constitutes about 0.53 to 5.1% by mass, and cordierite constitutes the balance.

Further, it is preferred that the content of disilicate is 4.5% by mass or more and 7.0% by mass or less, and the content of spinel is 1.4% by mass or more and 3.3% by mass or less. Consequently, the absolute value of the coefficient of thermal expansion of the cordierite ceramic at room temperature (20 to 25°C) can be further decreased. Moreover, when the content of disilicate is 4.9% by mass or more and 5.6% by mass or less, and the content of spinel is 2.2% by mass or more and 2.8% by mass or less, the absolute value of the coefficient of thermal expansion of the cordierite ceramic at room temperature (20 to 25°C) can be decreased to a value close to zero.

It is preferred that the cordierite ceramic of this embodiment further contains a pigment component. When the cordierite ceramic contains a pigment component as described above, a visual effect of harmonizing or accentuating colors can be provided by combining the cordierite ceramic with a ceramic having a different color tone. If the cordierite ceramic is prepared using a pigment component having a color tone in the grey type or the like, when the cordierite ceramic is used as a support member of an optical system such as, for example, a lens barrel for analysis which is affected by light scattering, the cordierite ceramic presents a color tone in the grey type. Therefore, light scattering is suppressed, so that a reduction in analysis accuracy can be kept low.

Also, in observation of the state of a processed product in a semiconductor manufacturing device, observation with an optical device such as a small camera is hindered when light is scattered by a member for the semiconductor manufacturing device. Therefore, the cordierite ceramic is preferably a cordierite ceramic presenting a color tone in the grey type when used as a member that requires suppression of light scattering.

For the cordierite ceramic to present a color tone in the grey type, which is capable of suppressing light scattering, it is preferred that the cordierite ceramic contains Mn, Cr and Co as a pigment component, and the total content of Mn, Cr and Co in terms of MnO₂, Cr₂O₃ and CoO, respectively, is 0.05% by mass or more and 3% by mass or less based on 100% by mass of the main component.

When the cordierite ceramic contains Mn, Cr and Co as pigment components, and the total content of Mn, Cr and Co in terms of MnO₂, Cr₂O₃ and CoO, respectively, is 0.05% by mass or more and 3% by mass or less based on 100% by mass of the main component as described above, influences on the coefficient of thermal expansion and mechanical properties are low. Further, the cordierite ceramic can present a color tone in the grey type, which is capable of suppressing light scattering, without deterioration of appearance due to variations in color tone caused by an increase in the amount of heterogeneous phases (e.g., MnAl₂O₄ and MnCr₂O₄) in reactions of pigment components and reactions of a main component with a pigment component.

If the color tone is too dark, light energy is absorbed (hereinafter, referred to as light absorption) to elevate the temperature, and a dimensional change may occur due to expansion of the cordierite ceramic as a result of the temperature elevation. Therefore, the lightness index L* in the CIE1976L*a*b* color space is preferably 50 or more and 70 or less for suppression of light scattering and suppression of light absorption. The lightness index L* can be measured in accordance with JIS Z 8722-2000.

When the above-described cordierite ceramic having a small coefficient of thermal expansion and an excellent mechanical strength is used as a member for semiconductor manufacturing devices, a positioning accuracy of 100 nm (0.1 µm) or less can be achieved, so that the quality and yield can be improved in formation of a high-precision circuit on a Si wafer.

Next, a method for manufacturing the cordierite ceramic according to this embodiment will be described.

As the method for manufacturing the cordierite ceramic according to this embodiment, first, a preliminarily synthesized synthetic cordierite powder having an average particle diameter of 0.5 to 5 µm, a spinel powder having an average particle diameter of 0.5 to 3 µm, and an oxide powder of any one of Y, Yb, Er and Ce having an average particle diameter of 0.5 to 2 µm are provided as a primary raw material.

The synthetic cordierite powder and spinel powder form a main component in this embodiment, and the oxide powder of any one of Y, Yb, Er and Ce forms an accessory component. The synthetic cordierite powder is a powder synthesized preliminarily in a composition including Mg in an amount of 11.7% by mass or more and 13.3% by mass or less in terms of an oxide, Al in an amount of 29.1% by mass or more and 33.8% by mass or less in terms of an oxide and Si in an amount of 52.0% by mass or more and 53.6% by mass or less in terms of an oxide after the added amount of the spinel powder is subtracted from 100% by mass of the main component.

Predetermined amounts of the synthetic cordierite powder and spinel powder, for example, 93. 5% by mass or more and 99.9% by mass or less of the synthetic cordierite powder and 0.01% by mass or more and 6.5% by mass or less of the spinel powder are weighed. Next, a slurry is obtained by weighing the accessory component so that its amount ranges from 4.5% by mass or more and 15.0% by mass or less based on 100% by mass of the total of the synthetic cordierite powder and spinel powder, adding pure water and various kinds of binders, and wet-mixing and pulverizing the mixture for 5 to 30 hours using a ball mill until the average particle diameter is 2 µm or less.

By employing the added amount described above, the composition of the fired cordierite ceramic includes Mg in an amount of 12.6% by mass or more and 14.0% by mass or less in terms of an oxide, Al in an amount of 33.4% by mass or more and 34.4% by mass or less in terms of an oxide and Si in an amount of 52.0% by mass or more and 53.6% by mass or less in terms of an oxide.

When a pigment component is added, the pigment component may be weighed in an amount of, for example, 0.05% by mass or more and 3.0% by mass or less based on 100% by mass of the main component, placed in a ball mill together with the synthetic cordierite powder, the spinel powder and the oxide powder of any one of Y, Yb, Er and Ce, and wet-mixed in accordance with the method described above. Particularly, the pigment component preferably contains Mn, Cr and Co.

Next, by a spray granulation method (spray drying method), the slurry is sprayed to be granulated as a secondary raw material. Then, the secondary raw material is molded by an isostatic pressing (rubber pressing) method or a powder pressing method, and the molded product is subjected to cutting and processing as necessary. Then, the molded product is held at a maximum temperature of 1340 to 1440°C for 1 hour or more and 10 hours or less in an air atmosphere in a sintering furnace. Thereafter, by employing such a sintering condition that the temperature is lowered to 1000°C at a rate of 10°C/min or less, disilicate produced by reaction of the accessory component with SiO₂ in the synthetic cordierite can be made present. Particularly, for ensuring that the ratio (A/B) of the content of disilicate (A) to the content of spinel (B) of the sintered cordierite ceramic falls within the range of 0.5 or more and 24.0 or less, a maximum temperature of 1350 to 1420°C may be employed.

Then, the cordierite ceramic of this embodiment can be obtained by carrying out grinding process as necessary. The cordierite ceramic may be made further dense by a HP method (hot pressing method) or a HIP method (hot isostatic pressing method) after sintering. A four-point bending strength of 190 MPa or more can be thereby achieved.

The primary raw material may be changed to an oxide powder of any one of Y, Yb, Er and Ce, or a part thereof may be added in the form of disilicate (Y₂Si₂O₇, Yb₂Si₂O₇, Er₂Si₂O₇ or Ce₂Si₂O₇).

### Example 1

As illustrated in Table 1, samples were prepared with the compounding composition, accessory component type, added amount and the like changed in a variety of ways, and determination of the mass ratio of each component, identification of crystal phases and measurement of the coefficient of thermal expansion for cordierite ceramics were performed.

First, as a primary raw material, a synthetic cordierite powder having an average particle diameter of 2 µm (synthesized preliminarily in the composition of MgO, Al₂O₃ and SiO₂ illustrated in Table 1), a spinel powder having a average particle diameter of 1 µm and powders of Yb₂O₃, Y₂O₃, Er₂O₃ and Ce₂O₃, as an accessory component, having a average particle diameter of 1 µm were provided. Then, the spinel powder was weighed so as to obtain an added amount as illustrated in Table 1, and the synthetic cordierite powder was weighed so as to obtain an amount determined by subtracting the added amount of the spinel powder from 100% by mass.

Then, a slurry was obtained by weighing the accessory component so that the ratio thereof would be as illustrated in Table 1 based on 100% by mass of the total of the synthetic cordierite powder and spinel powder, adding pure water, and a binder in an amount of 2% by mass or less based on 100% by mass of the total of the main component and accessory component, and wet-mixing and pulverizing the mixture for 24 hours using a ball mill until the average particle diameter was 2 µm or less.

Next, by a spray granulation method (spray drying method), the slurry was sprayed to be granulated, so that a secondary raw material was obtained. Then, the secondary raw material was molded by a powder pressing method, and the molded product was held at a maximum temperature of 1415°C for 5 hours in an air atmosphere, and then sintered while the temperature was lowered to 1000°C at a rate of 10°C/min. Then, grinding process was carried out to thereby obtain samples Nos. 1 to 15, 17 to 23, 25 to 35, 37 to 39 and 41 to 45 each having a dimension of a height of 3 mm, a width of 4 mm and a length of 45 mm.

Further, samples Nos. 24, 36, 40 and 46 were obtained by the same manufacturing method as described above except that the spinel powder was not added. Further, sample No. 16 was obtained by the same manufacturing method as described above except that Yb₂O₃, Y₂O₃, Er₂O₃ and Ce₂O₃ were not added as an accessory component.

Then, for samples Nos. 1 to 46, a part of the sample was pulverized, the resulting powder was dissolved in a solution of hydrochloric acid, the resulting solution was then measured using an ICP emission spectrophotometer (ICPS-8100 manufactured by Shimadzu Corporation), and the obtained value of the content of each metal element was used to calculate an oxide equivalent content of each element. Then, the value calculated in terms of an oxide was used to determine mass ratios of MgO, Al₂O₃ and SiO₂ in 100% by mass of the total thereof and a mass ratio of the accessory component to 100% by mass of the total of MgO, Al₂O₃ and SiO₂ after sintering. The results are illustrated in Table 2.

An X-ray diffraction chart was obtained by making an X-ray diffraction measurement of the surface of each sample under conditions of 2θ = 8° to 80° and CuKα₁ measurement using an X-ray diffractometer (X'PertPRO manufactured by PANalytical, Inc.). The obtained X-ray diffraction chart was checked with a JCPDS card to perform identification, thereby determining presence/absence of cordierite, disilicate and spinel. When the presence was confirmed, "O" was given, and when the presence was not confirmed, "-" was given in Table 2.

The coefficient of thermal expansion was determined as follows. A test piece is prepared by cutting each sample into a length of 10 mm and subjecting both edge surfaces of the cut sample to R processing. For the resultant test piece, coefficient of thermal expansion at a temperature ranging from 20 to 25°C was measured at a temperature elevation rate of 1°C/min in a constant temperature elevation measurement mode using Laser Thermal Expansion Meter LIX-1 (Shinku Riko, Inc.), and calculated an average of measured values. The results were illustrated in Table 2.

**[Table 1]**

| | Synthetic Cordierite Composition | | | Spinel MgAl₂O₄ (% by mass) | Accessory Component | |
|---|---|---|---|---|---|---|
| Sample No | MgO (% by mass) | Al₂O₃ (% by mass) | SiO₂ (% by mass) | | Kind | Added Amount (% by mass) |
| 1 | 11.7 | 32.2 | 53.1 | 3.0 | Yb₂O₃ | 8.5 |
| 2 | 11.8 | 32.2 | 53.0 | 3.0 | Yb₂O₃ | 8.5 |
| 3 | 12.5 | 31.6 | 52.9 | 3.0 | Yb₂O₃ | 8.5 |
| 4 | 13.2 | 31.2 | 52.6 | 3.0 | Yb₂O₃ | 8.5 |
| 5 | 13.3 | 31.2 | 52.5 | 3.0 | Yb₂O₃ | 8.5 |
| 6 | 12.3 | 31.1 | 53.6 | 3 0 | Yb₂O₃ | 8.5 |
| 7 | 12.2 | 31.2 | 53.6 | 3.0 | Yb₂O₃ | 8.5 |
| 8 | 12.4 | 31.7 | 52.9 | 3.0 | Yb₂O₃ | 8.5 |
| 9 | 12.8 | 32.2 | 52.0 | 3.0 | Yb₂O₃ | 8.5 |
| 10 | 12.7 | 32.3 | 52.0 | 3.0 | Yb₂O₃ | 8.5 |
| 11 | 13.2 | 31.9 | 51.9 | 3.0 | Yb₂O₃ | 8.5 |
| 12 | 13.2 | 31.8 | 52.0 | 3.0 | Yb₂O₃ | 8.5 |
| 13 | 12.4 | 31.8 | 52.8 | 3.0 | Yb₂O₃ | 8.5 |
| 14 | 11.8 | 31.6 | 53.6 | 3.0 | Yb₂O₃ | 8.5 |
| 15 | 11.8 | 31.5 | 53.7 | 3.0 | Yb₂O₃ | 8.5 |
| 16 | 12.5 | 31.6 | 52.9 | 3.0 | - | 0 |
| 17 | 12.5 | 31.6 | 52.9 | 3.0 | Yb₂O₃ | 4.0 |
| 18 | 12.5 | 31.6 | 52.9 | 3.0 | Yb₂O₃ | 4.5 |
| 19 | 12.5 | 31.6 | 52.9 | 3.0 | Yb₂O₃ | 5.0 |
| 20 | 12.5 | 31.6 | 52.9 | 3.0 | Yb₂O₃ | 10.0 |
| 21 | 12.5 | 31.6 | 52.9 | 3.0 | Yb₂O₃ | 14.5 |
| 22 | 12.5 | 31.6 | 52.9 | 3.0 | Yb₂O₃ | 15.0 |
| 23 | 12.5 | 31.6 | 52.9 | 3.0 | Yb₂O₃ | 15.5 |
| 24 | 13.3 | 33.8 | 52.9 | 0 | Yb₂O₃ | 8.5 |
| 25 | 13.3 | 33.8 | 52.89 | 0.01 | Yb₂O₃ | 8.5 |
| 26 | 13.3 | 33.7 | 52.9 | 0.1 | Yb₂O₃ | 8.5 |
| 27 | 13.0 | 33.1 | 52.9 | 1.0 | Yb₂O₃ | 8.5 |
| 28 | 12.2 | 30.9 | 52.9 | 4.0 | Yb₂O₃ | 8.5 |
| 29 | 11.6 | 29.5 | 52.9 | 6.0 | Yb₂O₃ | 8.5 |
| 30 | 11.5 | 29.1 | 52.9 | 6.5 | Yb₂O₃ | 8.5 |
| 31 | 13.3 | 31.3 | 52.4 | 3.0 | Yb₂O₃ | 8.5 |
| 32 | 12.8 | 32.3 | 51.9 | 3.0 | Yb₂O₃ | 8.5 |
| 33 | 11.7 | 31.6 | 53.7 | 3.0 | Yb₂O₃ | 8.5 |
| 34 | 13.3 | 32.3 | 51.4 | 3.0 | Yb₂O₃ | 8.5 |
| 35 | 12.5 | 31.6 | 52.9 | 3.0 | Y₂O₃ | 4.0 |
| 36 | 13.3 | 33.8 | 52.9 | 0 | Y₂O₃ | 8.5 |
| 37 | 12.5 | 31.6 | 52.9 | 3.0 | Y₂O₃ | 8.5 |
| 38 | 12.5 | 31.6 | 52.9 | 3.0 | Y₂O₃ | 15.5 |
| 39 | 12.5 | 31.6 | 52.9 | 3.0 | Er₂O₃ | 4.0 |
| 40 | 13.3 | 33.8 | 52.9 | 0 | Er₂O₃ | 8.5 |
| 41 | 12.5 | 31.6 | 52.9 | 3.0 | Er₂O₃ | 8.5 |
| 42 | 12.5 | 31.6 | 52.9 | 3.0 | Er₂O₃ | 15.5 |
| 43 | 12.5 | 31.6 | 52.9 | 3.0 | Ce₂O₃ | 4.0 |
| 44 | 13.3 | 33.8 | 52.9 | 0 | Ce₂O₃ | 8.5 |
| 45 | 12.5 | 31.6 | 52.9 | 3.0 | Ce₂O₃ | 8.5 |
| 46 | 12.5 | 31.6 | 52.9 | 3.0 | Ce₂O₃ | 15.5 |

| [Table 2] | | | | | | | | | |
|---|---|---|---|---|---|---|---|---|---|
| | Main Component | | | Accessory Component | | Crystal Phases | | | |
| Sample No. | MgO (% by mass) | Al₂O₃ (% by mass) | SiO₂ (% by mass) | Kind | Content (% by mass) | Cordierite | Disilicate | Spinel | Coefficient of Thermal Expansion (ppb/°C) |
| 1 | 12.5 | 34.4 | 53.1 | Yb₂O₃ | 8.5 | O | O | O | -132 |
| 2 | 12.6 | 34.4 | 53.0 | Yb₂O₃ | 8.5 | O | O | O | -120 |
| 3 | 13.3 | 33.8 | 52.9 | Yb₂O₃ | 8.5 | O | O | O | -15 |
| 4 | 14.0 | 33.4 | 52.6 | Yb₂O₃ | 8.5 | O | O | O | 55 |
| 5 | 14.1 | 33.4 | 52.5 | Yb₂O₃ | 8.5 | O | O | O | 125 |
| 6 | 13.1 | 33.3 | 53.6 | Yb₂O₃ | 8.5 | O | O | O | -133 |
| 7 | 13.0 | 33.4 | 53.6 | Yb₂O₃ | 8.5 | O | O | O | -114 |
| 8 | 13.2 | 33.9 | 52.9 | Yb₂O₃ | 8.5 | O | O | O | -25 |
| 9 | 13.6 | 34.4 | 52.0 | Yb₂O₃ | 8.5 | O | O | O | -116 |
| 10 | 13.5 | 34.5 | 52.0 | Yb₂O₃ | 8.5 | O | O | O | -122 |
| 11 | 14.0 | 34.1 | 51.9 | Yb₂O₃ | 8.5 | O | O | O | -128 |
| 12 | 14.0 | 34.0 | 52.0 | Yb₂O₃ | 8.5 | O | O | O | -119 |
| 13 | 13.2 | 34.0 | 52.8 | Yb₂O₃ | 8.5 | O | O | O | -20 |
| 14 | 12.6 | 33.8 | 53.6 | Yb₂O₃ | 8.5 | O | O | O | -102 |
| 15 | 12.6 | 33.7 | 53.7 | Yb₂O₃ | 8.5 | O | O | O | -121 |
| 16 | 13.3 | 33.8 | 52.9 | - | 0 | O | - | O | - |
| 17 | 13.3 | 33.8 | 52.9 | Yb₂O₃ | 4.0 | O | O | O | -140 |
| 18 | 13.3 | 33.8 | 52.9 | Yb₂O₃ | 4.5 | O | O | O | -118 |
| 1 9 | 13.3 | 33.8 | 52.9 | Yb₂O₃ | 5.0 | O | O | O | -98 |
| 20 | 13.3 | 33.8 | 52.9 | Yb₂O₃ | 10.0 | O | O | O | 14 |
| 21 | 13.3 | 33.8 | 52.9 | Yb₂O₃ | 14.5 | O | O | O | 108 |
| 22 | 13.3 | 33.8 | 52.9 | Yb₂O₃ | 15.0 | O | O | O | 119 |
| 23 | 13.3 | 33.8 | 52.9 | Yb₂O₃ | 15.5 | O | O | O | 129 |
| 24 | 13.3 | 33.8 | 52.9 | Yb₂O₃ | 8.5 | O | O | - | -121 |
| 25 | 13.3 | 33.8 | 52.9 | Yb₂O₃ | 8.5 | O | O | O | -117 |
| 26 | 13.3 | 33.8 | 52.9 | Yb₂O₃ | 8.5 | O | O | O | -85 |
| 27 | 13.3 | 33.8 | 52.9 | Yb₂O₃ | 8.5 | O | O | O | -24 |
| 28 | 13.3 | 33.8 | 52.9 | Yb₂O₃ | 8.5 | O | O | O | 10 |
| 29 | 13.3 | 33.8 | 52.9 | Yb₂O₃ | 8.5 | O | O | O | 102 |
| 30 | 13.3 | 33.8 | 52.9 | Yb₂O₃ | 8.5 | O | O | O | 115 |
| 31 | 14.1 | 33.5 | 52.4 | Yb₂O₃ | 8.5 | O | O | O | 123 |
| 32 | 13.6 | 34.5 | 51.9 | Yb₂O₃ | 8.5 | O | O | O | -125 |
| 33 | 12.5 | 33.8 | 53.7 | Yb₂O₃ | 8.5 | O | O | O | -122 |
| 34 | 14.1 | 34.5 | 51.4 | Yb₂O₃ | 8.5 | O | O | O | -128 |
| 35 | 13.3 | 33.8 | 52.9 | Y₂O₃ | 4.0 | O | O | O | -138 |
| 36 | 13.3 | 33.8 | 52.9 | Y₂O₃ | 8.5 | O | O | - | - 23 |
| 37 | 13.3 | 33.8 | 52.9 | Y₂O₃ | 8.5 | O | O | O | -18 |
| 38 | 13.3 | 33.8 | 52.9 | Y₂O₃ | 15.5 | O | O | O | 68 |
| 39 | 13.3 | 33.8 | 52.9 | Er₂O₃ | 4.0 | O | O | O | -132 |
| 40 | 13.3 | 33.8 | 52.9 | Er₂O₃ | 8.5 | O | O | - | -126 |
| 41 | 13.3 | 33.8 | 52.9 | Er₂O₃ | 8.5 | O | O | O | -9 |
| 42 | 13.3 | 33.8 | 52.9 | Er₂O₃ | 15.5 | O | O | O | 124 |
| 43 | 13.3 | 33.8 | 52.9 | Ce₂O₃ | 4.0 | O | O | O | -129 |
| 44 | 13.3 | 33.8 | 52.9 | Ce₂O₃ | 8.5 | O | O | - | -125 |
| 45 | 13.3 | 33.8 | 52.9 | Ce₂O₃ | 8.5 | O | O | O | -5 |
| 46 | 13.3 | 33.8 | 52.9 | Ce₂O₃ | 15.5 | O | O | O | 177 |

From the results in Table 2, samples Nos. 1, 5, 6, 10, 11, 15 and 31 to 34 were present cordierite, disilicate and spinel as crystal phases. However, the composition of the main component of the cordierite ceramic did not satisfy a composition including Mg in an amount of 12.6% by mass or more and 14.0% by mass or less in terms of an oxide, Al in an amount of 33.4% by mass or more and 34.4% by mass or less in terms of an oxide and Si in an amount of 52.0% by mass or more and 53.6% by mass or less in terms of an oxide. Thus, the coefficient of thermal expansion fell outside the range of -120 ppb/°C to +120 ppb/°C.

Samples Nos. 17, 23, 35, 38, 39, 42, 43 and 46 were also present cordierite, disilicate and spinel as crystal phases. However, they did not contain any one of Y, Yb, Er and Ce as an accessory component in an amount of 4.5% by mass or more and 15.0% by mass or less in terms of an oxide based on 100% by mass of the main component. Thus, the coefficient of thermal expansion fell outside the range of -120 ppb to +120 ppb.

For sample No. 16, the coefficient of thermal expansion could not be measured because the accessory component was not added, and thus the accessory component did not act as a sintering aid to achieve densification. In identification of crystal phases, disilicate was not identified.

For samples Nos. 24, 36, 40 and 44, spinel was not identified in identification of crystal phases, and the coefficient of thermal expansion fell outside the range of -120 ppb/°C to +120 ppb/°C.

In contrast, samples Nos. 2 to 4, 7 to 9, 12 to 14, 18 to 22, 25 to 30, 37, 41 and 45 contained a main component having a composition including Mg in an amount of 12.6% by mass or more and 14.0% by mass or less in terms of an oxide, Al in an amount of 33.4% by mass or more and 34.4% by mass or less in terms of an oxide and Si in an amount of 52.0% by mass or more and 53.6% by mass or less in terms of an oxide, also contained as an accessory component any one of Y, Yb, Er and Ce in an amount of 4.5% by mass or more and 15.0% by mass or less in terms of an oxide based on 100% by mass of the main component, and were present cordierite, disilicate and spinel as crystal phases. Therefore, the presence ratio of crystal phases of cordierite exhibiting a coefficient of thermal expansion on the negative side, and disilicate and spinel each exhibiting a coefficient of thermal expansion on the positive side was optimized, and the coefficient of thermal expansion of the resulting cordierite ceramic could be made to be a very small value ranging from -120 ppb/°C to +120 ppb/°C.

For samples Nos. 24, 36, 40 and 44 having no crystal phase of spinel, the test piece was prepared, and the four-point bending strength was measured in accordance with JIS R 1601-2008 and found to be less than 170 MPa. In contrast, samples Nos. 2 to 4, 7 to 9, 12 to 14, 18 to 22, 25 to 30, 37, 41 and 45 had a four-point bending strength of 170 MPa or more, and it was found that the cordierite ceramic of this embodiment can be preferably used for members for semiconductor manufacturing devices, such as vacuum device structures, susceptors, stages, and jigs in semiconductor manufacturing processes, because it has a small coefficient of thermal expansion and a high four-point bending strength, and thus the possibility of damage under self-weight, damage under a load applied with a cantilever support structure, or the like, which has been a problem in upsizing a member in association with upsizing a semiconductor wafer, is low. Further, when samples Nos. 2 to 4, 7 to 9, 12 to 14, 18 to 22, 25 to 30, 37, 41 and 45 were subjected to a treatment by a HIP method (hot isostatic pressing method), mechanical properties were further improved with the four-point bending strength being 190 MPa or more.

### Example 2

Next, samples Nos. 47 to 78 were prepared with the compounding composition and sintering condition changed in a variety of ways as illustrated in Table 3. Concerning the preparation method, the samples were prepared by the same manufacturing method as in Example 1. The mass ratio of each component and the coefficient of thermal expansion of the cordierite ceramic were measured by the same method as in Example 1.

The ratio (A/B) of the content of disilicate (A) to the content of spinel (B) in each sample was calculated. The ratio (A/B) of the content of disilicate (A) to the content of spinel (B) was determined by calculating the contents from the ratio of the crystal phase of each of cordierite, disilicate and spinel by making an X-ray diffraction measurement under conditions of 2 θ = 8° to 80° and CuKα₁ measurement using an X-ray diffractometer (X'PertPRO manufactured by PANalytical, Inc.), and analyzing the result of the X-ray diffraction measurement using Rietveld Analysis Program RIETAN. Then, the ratio (A/B) was calculated by dividing the calculated content of disilicate (A) by the content of spinel (B).

The mass ratios of MgO, Al₂O₃ and SiO₂ in 100% by mass of the total thereof and the mass ratio of the accessory component to 100% by mass of the total of MgO, Al₂O₃ and SiO₂, the content of disilicate (A), the content of spinel (B), the ratio A/B and the coefficient of thermal expansion after sintering are illustrated in Table 4.

**[Table 3]**

| | Synthetic Cordierite Component | | | Spinel | Accessory Component | | | |
|---|---|---|---|---|---|---|---|---|
| Sample No | MgO (% by mass) | Al₂O₃ (% by mass) | SiO₂ (% by mass) | MgAl₂O₄ (% by mass) | Kind | Added Amount (% by mass) | Maximum Temperature (°C) | Temperature Dropping Rate to 1000°C (°C/min) |
| 47 | 11.77 | 29.93 | 52.9 | 5.40 | Yb₂O₃ | 10 | 1348 | 10 |
| 48 | 11.86 | 30.14 | 52.9 | 5.10 | Yb₂O₃ Yb₂O₃ | 10 | 1350 | 10 |
| 49 | 11.91 | 30.29 | 52.9 | 4.90 | Yb₂O₃ | 10 | 1350 | 5 |
| 50 | 11.97 | 30.43 | 52.9 | 4.70 | Yb₂O₃ | 10 | 1355 | 10 |
| 51 | 12.03 | 30.57 | 52.9 | 4.50 | Yb₂O₃ | 10 | 1355 | 5 |
| 52 | 12.05 | 30.65 | 52.9 | 4.40 | Yb₂O₃ | 10 | 1360 | 10 |
| 53 | 12.11 | 30.79 | 52.9 | 4.20 | Yb₂O₃ | 10 | 1360 | 5 |
| 54 | 12.37 | 31.43 | 52.9 | 3.30 | Yb₂O₃ | 10 | 1365 | 10 |
| 55 | 12.51 | 31.79 | 52.9 | 2.80 | Yb₂O₃ | 10 | 1365 | 5 |
| 56 | 12.61 | 32.04 | 52.9 | 2.45 | Yb₂O₃ | 10 | 1370 | 10 |
| 57 | 12.69 | 32.26 | 52.9 | 2.15 | Yb₂O₃ | 10 | 1370 | 5 |
| 58 | 12.76 | 32.44 | 52.9 | 1.90 | Yb₂O₃ | 10 | 1375 | 10 |
| 59 | 12.82 | 32.58 | 52.9 | 1.70 | Yb₂O₃ | 10 | 1375 | 5 |
| 60 | 12.86 | 32.69 | 52.9 | 1.55 | Yb₂O₃ | 10 | 380 | 10 |
| 61 | 12.90 | 32.80 | 52.9 | 1.40 | Yb₂O₃ | 10 | 1380 | 5 |
| 62 | 12.95 | 32.90 | 52.9 | 1.25 | Yb₂O₃ | 10 | 1385 | 10 |
| 63 | 12.97 | 32.98 | 52.9 | 1.15 | Yb₂O₃ | 10 | 1385 | 5 |
| 64 | 12.99 | 33.01 | 52.9 | 1.10 | Yb₂O₃ | 10 | 1390 | 10 |
| 65 | 13.02 | 33.08 | 52.9 | 1.00 | Yb₂O₃ | 10 | 1390 | 5 |
| 66 | 13.03 | 33.12 | 52.9 | 0.95 | Yb₂O₃ | 10 | 1395 | 10 |
| 67 | 13.05 | 33.15 | 52.9 | 0.90 | Yb₂O₃ | 10 | 1395 | 5 |
| 68 | 13.06 | 33.19 | 52.9 | 0.85 | Yb₂O₃ | 10 | 1400 | 10 |
| 69 | 13.07 | 33.23 | 52.9 | 0.80 | Yb₂O₃ | 10.6 | 1400 | 5 |
| 70 | 13.09 | 33.26 | 52.9 | 0.75 | Yb₂O₃ | 10 | 1405 | 10 |
| 71 | 13.09 | 33.28 | 52.9 | 0.73 | Yb₂O₃ | 10 | 1405 | 5 |
| 72 | 13.10 | 33.30 | 52.9 | 0.70 | Yb₂O₃ | 10 | 1410 | 10 |
| 73 | 13.11 | 33.32 | 52.9 | 0.67 | Yb₂O₃ | 10 | 410 | 5 |
| 74 | 13.12 | 33.33 | 52.9 | 0.65 | Yb₂O₃ | 0 | 415 | 10 |
| 75 | 13.1 3 | 33.37 | 52.9 | 0.60 | Yb₂O₃ | 0 | 1415 | 5 |
| 76 | 13.14 | 33.39 | 52.9 | 0.57 | Yb₂O₃ | 10 | 1420 | 10 |
| 77 | 13.16 | 33.44 | 52.9 | 0.50 | Yb₂O₃ | 10 | 1420 | 5 |
| 78 | 13.15 | 33.43 | 52.9 | 0.52 | Yb₂O₃ | 10 | 1423 | 5 |

**[Table 4]**

| | Main Component | | | Accessory Component | | Disilicate | Spinel | | |
|---|---|---|---|---|---|---|---|---|---|
| Sample No. | MgO (% by mass) | Al₂O₃ (% by mass) | SiO₂ (% by mass) | Kind | Content (% by mass) | A (% by mass) | B (% by mass) | A/B | Coefficient of Thermal Expansion (ppb) |
| 47 | 13.3 | 33.8 | 52.9 | Yb₂O₃ | 10 | 2.16 | 5.41 | 0.40 | -105 |
| 48 | 13.3 | 33.8 | 52.9 | Yb₂O₃ | 10 | 2.56 | 5.12 | 0.50 | -98 |
| 49 | 13.3 | 33.8 | 52.9 | Yb₂O₃ | 10 | 2.84 | 4.89 | 0.58 | -92 |
| 50 | 13.3 | 33.8 | 52.9 | Yb₂O₃ | 10 | 3.19 | 4.69 | 0.68 | -88 |
| 51 | 13.3 | 33.8 | 52.9 | Yb₂O₃ | 10 | 3.54 | 4.52 | 0.78 | -83 |
| 52 | 13.3 | 33.8 | 52.9 | Yb₂O₃ | 10 | 3.89 | 4.37 | 0.89 | -76 |
| 53 | 13.3 | 33.8 | 52.9 | Yb₂O₃ | 10 | 4.23 | 4.23 | 1.00 | -71 |
| 54 | 13.3 | 33.8 | 52.9 | Yb₂O₃ | 10 | 4.50 | 3.30 | 1.36 | -33 |
| 55 | 13.3 | 33.8 | 52.9 | Yb₂O₃ | 10 | 4.90 | 2.80 | 1.75 | -11 |
| 56 | 13.3 | 33.8 | 52.9 | Yb₂O₃ | 10 | 5.28 | 2.44 | 2.16 | 5 |
| 57 | 13.3 | 33.8 | 52.9 | Yb₂O₃ | 10 | 5.60 | 2.20 | 2.55 | 17 |
| 58 | 13.3 | 33.8 | 52.9 | Yb₂O₃ | 10 | 5.98 | 1.92 | 3.11 | 27 |
| 59 | 13.3 | 33.8 | 52.9 | Yb₂O₃ | 10 | 6.35 | 1.72 | 3.69 | 35 |
| 60 | 13.3 | 33.8 | 52.9 | Yb₂O₃ | 10 | 6.69 | 1.55 | 4.31 | 42 |
| 61 | 13.3 | 33.8 | 52.9 | Yb₂O₃ | 10 | 7.00 | 1.40 | 5.00 | 49 |
| 62 | 13.3 | 33.8 | 52.9 | Yb₂O₃ | 10 | 7.42 | 1.26 | 5.87 | 54 |
| 63 | 13.3 | 33.8 | 52.9 | Yb₂O₃ | 10 | 7.81 | 1.18 | 6.62 | 59 |
| 64 | 13.3 | 33.8 | 52.9 | Yb₂O₃ | 10 | 8.19 | 1.09 | 7.51 | 61 |
| 65 | 13.3 | 33.8 | 52.9 | Yb₂O₃ | 10 | 8.56 | 1.01 | 8.48 | 64 |
| 66 | 13.3 | 33.8 | 52.9 | Yb₂O₃ | 10 | 8.94 | 0.95 | 9.41 | 66 |
| 67 | 13.3 | 33.8 | 52.9 | Yb₂O₃ | 10 | 9.29 | 0.90 | 10.32 | 69 |
| 68 | 13.3 | 33.8 | 52.9 | Yb₂O₃ | 10 | 9.65 | 0.86 | 11.22 | 71 |
| 69 | 13.3 | 33.8 | 52.9 | Yb₂O₃ | 10 | 10.02 | 0.82 | 12.22 | 73 |
| 70 | 13.3 | 33.8 | 52.9 | Yb₂O₃ | 10 | 10.38 | 0.78 | 13.31 | 74 |
| 71 | 13.3 | 33.8 | 52.9 | Yb₂O₃ | 10 | 10.72 | 0.74 | 14.49 | 76 |
| 72 | 13.3 | 33.8 | 52.9 | Yb₂O₃ | 10 | 11.07 | 0.71 | 15.59 | 78 |
| 73 | 13.3 | 33.8 | 52.9 | Yb₂O₃ | 10 | 11.41 | 0.66 | 17.29 | 80 |
| 74 | 13.3 | 33.8 | 52.9 | Yb₂O₃ | 10 | 11.73 | 0.64 | 18.33 | 83 |
| 75 | 13.3 | 33.8 | 52.9 | Yb₂O₃ | 10 | 12.05 | 0.62 | 19.44 | 86 |
| 76 | 13.3 | 33.8 | 52.9 | Yb₂O₃ | 10 | 12.38 | 0.59 | 20.98 | 89 |
| 77 | 13.3 | 33.8 | 52.9 | Yb₂O₃ | 10 | 12.72 | 0.53 | 24.00 | 94 |
| 78 | 13.3 | 33.8 | 52.9 | Yb₂O₃ | 10 | 13.00 | 0.54 | 24.07 | 102 |

From the results in Table 4, for samples Nos. 48 to 77 in which the ratio of A to B (A/B) is 0.5 or more and 24.0 or less, where the content of disilicate is A and the content of spinel is B, the absolute value of coefficient of thermal expansion was small as compared to samples Nos. 47 and 78 in which the ratio (A/B) is less than 0.5 or more than 24.0, and the coefficient of thermal expansion could be made to the range of -100 ppb/°C to +100 ppb/°C.

Samples Nos. 54 to 61 having a content of disilicate of 4.5% by mass or more and 7.0% by mass or less and a content of spinel of 1.4% by mass or more and 3.3% by mass or less had a further small coefficient of thermal expansion ranging from -50 ppb/°C to +50 ppb/°C.

Samples Nos. 55 to 57 having a content of disilicate of 4.9% by mass or more and 5.6% by mass or less and a content of spinel of 2.2% by mass or more and 2.8% by mass or less had a coefficient of thermal expansion ranging from -20 ppb/°C to +20 ppb/°C, so that the coefficient of thermal expansion could be made close to zero.

Besides the compounding compositions illustrated in Table 3, various cordierite ceramics containing the main component having a composition including Mg in an amount of 12.6% by mass or more and 14.0% by mass or less in terms of an oxide, Al in an amount of 33.4% by mass or more and 34.4% by mass or less in terms of an oxide and Si in an amount of 52.0% by mass or more and 53. 6% by mass or less in terms of an oxide, and also containing as the accessory component any one of Y, Yb, Er and Ce in an amount of 4.5% by mass or more and 15.0% by mass or less in terms of an oxide based on 100% by mass of the main component were prepared, and the coefficient of thermal expansion of each cordierite ceramic was determined, and as a result it was found that the coefficient of thermal expansion could be made to the range of -100 ppb/°C to +100 ppb/°C because the ratio (A/B) was 0.5 or more and 0.24 or less.

### Example 3

Next, in addition to the same compounding composition as that of sample No. 56 illustrated in Table 3 in Example 2, the pigment components illustrated in Table 5 were each added in an amount of 1% by mass in total in terms of an oxide to prepare samples Nos. 79 to 86. Then, for these samples, the color tone was visually observed and the lightness index L* was measured.

Samples were prepared by the same manufacturing method as in Example 1 except that a pigment component was added together with a synthetic cordierite powder, a spinel powder and an oxide powder of Yb.

Then, the color tone of each sample obtained was visually observed, and illustrated in Table 5. The lightness index L* was measured in accordance with JIS Z 8722-2000 using a color-difference meter (CR-221 manufactured by former Minolta Corporation) with the CIE standard light source D65 used as a light source, the light reception mode of illumination set to the condition a ((45 - n)[45 - 0]) and the measurement diameter set to 3 mm. The results are illustrated in Table 5. For the sample No. 56 containing no pigment component, the result of visual observation of the color tone and the result of the lightness index L* were illustrated in Table 5 as well.

**[Table 5]**

| Sample No. | Pigment Component | Total of Pigment (% by mass) | Color Tone Observed Visually | Lightness Index L* |
|---|---|---|---|---|
| 56 | - | - | White Color | 92 |
| 79 | Mn | 1.00 | Light Gray Color | 78 |
| 80 | Cr | 1.00 | Light Green Color | 82 |
| 81 | Co | 1.00 | Light Blue Color | 86 |
| 82 | Fe | 1.00 | Light Red Color | 87 |
| 83 | Cu | 1.00 | Light Brown Color | 87 |
| 84 | Mn, Cr | 1.00 | Gray Color | 72 |
| 85 | Mn, Cr, Co | 1.00 | Gray Color | 65 |

It was found from the results in Table 5 that samples Nos. 79 to 83 containing a pigment component could form a ceramic having various color tones owing to the pigment component, and could provide a visual effect of harmonizing or accentuating colors by combination with a ceramic having a different color tone. It could also be found that these samples can suppress light scattering because of its small value of the lightness index L* as compared to sample No. 56 containing no pigment component. It was found that the sample No. 85 containing Mn, Cr and Co as a pigment component had a lightness index L* of 65, within the range of 50 to 70, i.e., a preferred value of the lightness index L* at which light scattering and also light absorption can be suppressed.

### Example 4

Next, in addition to the compounding composition as that of sample No. 56 illustrated in Table 3 in Example 2, samples were prepared with the content of the pigment component changed in a variety of ways as illustrated in Table 6, and the lightness index L* was measured. Samples were prepared by the same manufacturing method as in Example 1 except that a pigment component was added together with a synthetic cordierite powder, a spinel powder and an oxide powder of Yb. The content of the pigment component was measured by the same method as illustrated in Example 1 using an ICP emission spectrophotometer (ICPS-8100 manufactured by Shimadzu Corporation), and a value based on 100% by mass of the main component was calculated. The lightness index L* was measured by the same method as in Example 3. The results are illustrated in Table 6.

**[Table 6]**

| Sample No. | Pigment Component Composition | | | Total of Pigment (% by mass) | Lightness Index L* |
|---|---|---|---|---|---|
| | MnO₂ (% by mass) | Cr₂O₃ (% by mass) | CoO (% by mass) | | |
| 86 | 0.01 | 0.01 | 0.005 | 0.025 | 72 |
| 87 | 0.02 | 0.02 | 0.1 | 0.05 | 70 |
| 88 | 0.05 | 0.04 | 0.01 | 0.1 | 69 |
| 89 | 0.2 | 0.2 | 0.1 | 0.5 | 68 |
| 90 | 0.4 | 0.4 | 0.1 | 0.9 | 67 |
| 91 | 0.5 | 0.4 | 0.05 | 0.95 | 6b |
| 92 | 0.5 | 0. 4 | 0.1 | 1.0 | 65 |
| 93 | 0.9 | 0.9 | 0.2 | 2.0 | 57 |
| 94 | 1.3 | 1.3 | 0.4 | 3.0 | 50 |
| 95 | 1.35 | 1.35 | 0.4 | 3.1 | 48 |
| 96 | 0.5 | 0.5 | - | 1.0 | 73 |
| 97 | 0.5 | - | 0.5 | 1.0 | 75 |
| 98 | - | 0.5 | 0.5 | 1.0 | 75 |

It could be found from the results in Table 6 that samples Nos. 87 to 94 had a lightness index L* within the range of 50 to 70, i.e., a preferred value of the lightness index L* at which light scattering and also light absorption can be suppressed. It was confirmed that, for the lightness index L* to fall within this range, Mn, Cr and Co are contained as a pigment component, and the total content of Mn, Cr and Co in terms of MnO₂, Cr₂O₃ and CoO, respectively, is 0.05% by mass or more and 0.3% by mass or less based on 100% by mass of the main component.

For sample No. 95, slight variations in color tone were observed, while for samples Nos. 87 to 94, variations in color tone were not observed, and appearance was not deteriorated. Further, for samples Nos. 87 to 94, the coefficient of thermal expansion and the four-point bending strength were measured to found that the coefficient of thermal expansion was +2 ppb/°C and the four-point bending strength was -4 MPa as compared to the case where no pigment component was contained. From these results, it was found that samples Nos. 87 to 94 can form a cordierite ceramic having a small coefficient of thermal expansion and an excellent mechanical strength, and exhibiting a color tone capable of suppressing light scattering and also light absorption.

## Claims

1. A cordierite ceramic, comprising:
a main component having a composition comprising Mg in an amount of 12.6% by mass or more and 14.0% by mass or less in terms of an oxide, Al in an amount of 33.4% by mass or more and 34.4% by mass or less in terms of an oxide and Si in an amount of 52.0% by mass or more and 53.6% by mass or less in terms of an oxide, and
an accessory component,
wherein the accessory component comprises any one of Y, Yb, Er and Ce in an amount of 4.5% by mass or more and 15.0% by mass or less in terms of an oxide based on 100% by mass of the main component, wherein cordierite, disilicate and spinel are present as crystal phases.

2. The cordierite ceramic according to claim 1, wherein where the content of the disilicate is A and the content of the spinel is B, the ratio of A to B (A/B) is 0.5 or more and 24.0 or less.

3. The cordierite ceramic according to claim 1 or 2, wherein the content of the disilicate is 4.5% by mass or more and 7.0% by mass or less and the content of the spinel is 1.4% by mass or more and 3.3% by mass or less.

4. The cordierite ceramic according to any one of claims 1 to 3, a pigment component is further comprised.

5. The cordierite ceramic according to claim 4, wherein the pigment component comprises Mn, Cr and CoCr, and the total content of Mn, Cr and Co in terms of MnO₂, Cr₂O₃ and CoO, respectively, is 0.05% by mass or more and 3% by mass or less based on 100% by mass of the main component.

6. A member for semiconductor manufacturing devices which comprises the cordierite ceramic according to any one of claims 1 to 5.
